# EUROPÄISCHE PATENTSCHRIFT

(11) **EP 2 989 337 B1**
(45) Veröffentlichungstag und Bekanntmachung des Hinweises auf die Patenterteilung: **31.01.2018**
(21) Anmeldenummer: 14741266.2
(22) Anmeldetag: 15.07.2014
(51) Int. Cl.: F16C 32/04, F16C 39/02, F16C 33/78, F16C 33/76

(54) **FANGLAGER ZUM AUFFANGEN EINER ROTORWELLE EINER MASCHINE SOWIE MASCHINE**
SAFETY BEARING FOR RETAINING A ROTOR SHAFT OF A MACHINE AND MACHINE
PALIER DE RETENUE POUR LA RÉCEPTION D'UN ARBRE DE ROTOR D'UNE MACHINE ET MACHINE

(30) Priorität: 02.08.2013 DE 102013215244
(43) Veröffentlichungstag der Anmeldung: 02.03.2016
(73) Patentinhaber: Siemens Aktiengesellschaft, 80333 München (DE)
(72) Erfinder: MELLER, Frank, 02923 Trebus (DE)
(86) Internationale Anmeldenummer: PCT/EP2014/065131
(87) Internationale Veröffentlichungsnummer: WO 2015/014606

(56) Entgegenhaltungen:
- EP-A2- 1 055 832
- WO-A1-2009/115149
- WO-A1-2010/136264
- US-A1- 2009 133 431

## Beschreibung

Die Erfindung betrifft ein Fanglager zum Auffangen einer Rotorwelle einer Dampf- oder Gasturbine, wobei das Fanglager einen Außenring und einen gegenüber dem Außenring rotierbar angeordneten Innenring aufweist, wobei zwischen dem Außenring und dem Innenring Wälzkörper, insbesondere Kugeln, angeordnet sind. Ferner betrifft die Erfindung eine Dampf- oder Gasturbine, aufweisend eine Rotorwelle, wenigstens zwei Magnetlager zum rotierbaren Lagern der Rotorwelle, und zumindest zwei Fanglager zum Auffangen der Rotorwelle bei Ausfall der Funktion der Magnetlager.

Zur Lagerung der rotierenden Rotorwelle bei einer Maschine, wie einer Gas- oder Dampfturbine, werden heutzutage immer öfter Magnetlager zur betriebsgemäßen Lagerung der Rotorwelle eingesetzt, die mit Hilfe magnetischer Felder die rotierende Rotorwelle in einem Schwebezustand halten. Bei Ausfall des Magnetlagers, z. B. infolge eines Stromausfalls, fällt die Rotorwelle in Fanglager und wird von diesen aufgefangen. Ein Fanglager dient solchermaßen zum Auffangen der Rotorwelle. Das Fanglager übernimmt bis zu einem vollständigen Anhalten der Rotorwelle temporär die Lagerung der Rotorwelle. Fanglager müssen zum einen den Stoß beim Absturz der rotierenden Rotorwelle in das Fanglager aushalten und zum anderen ein sicheres Austrudeln der Rotorwelle in dem Fanglager gewährleisten. Fanglager weisen hierzu einen im Vergleich zum Rotorwellendurchmesser geringfügig größeren Innendurchmesser auf, so dass die Rotorwelle im Normalbetrieb, d. h. bei aktivem Magnetlager, das Fanglager nicht berührt. Üblicherweise sind Fanglager im Bereich des jeweiligen Endes der Rotorwelle im Ständergehäuse der Maschine untergebracht.

Aus der WO 2009/115149 A1 ist bekannt, zusätzlich zu einem Magnetlager, eine Rotorwelle eines Turboladers mit einem Fanglagersystem zu umlagern. Ferner ist bekannt, dass das Wälzlager des Fanglagersystems gegenüber dem Turbinenrad und/oder der Magnetlageranordnung abgedichtet wird.

Zur Abdichtung der Magnetlager nach außen werden bei derartigen Maschinen Dichtungen, wie Labyrinthdichtungen, eingesetzt, die an dem Lagergehäuse des Magnetlagers neben dem Magnetlager angeordnet sind. Durch die neben den Magnetlagern an der Außenseite an dem Ständergehäuse beziehungsweise Lagergehäuse angeordneten Dichtungen weist die Maschine eine erhöhte Länge auf.

Es ist Aufgabe der vorliegenden Erfindung, die voranstehend beschriebenen Nachteile bei Dampf- oder Gasturbine mit Rotorwellen und Magnetlagerung zumindest teilweise zu beheben. Insbesondere ist es Aufgabe der vorliegenden Erfindung ein Fanglager sowie eine Dampf- oder Gasturbine mit einer Rotorwelle, einer Magnetlagerung für die Rotorwelle und Fanglagern zum Auffangen der Rotorwelle zur Verfügung zu stellen, welche in kostengünstiger und einfacher Weise eine Abdichtung der Rotorwelle bei gleichzeitiger kurzer Bauform der Dampf- oder Gasturbine ermöglichen.

Voranstehende Aufgabe wird gelöst durch ein Fanglager mit den Merkmalen des Anspruchs 1 sowie durch eine Dampf- oder Gasturbine mit den Merkmalen des Anspruchs 2. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Fanglager beschrieben sind, selbstverständlich auch im Zusammenhang mit der erfindungsgemäßen Dampf- oder Gasturbine und jeweils umgekehrt, so dass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch ein Fanglager zum Auffangen einer Rotorwelle einer Dampf- oder Gasturbine, wobei das Fanglager einen Außenring und einen gegenüber dem Außenring rotierbar angeordneten Innenring aufweist, wobei zwischen dem Außenring und dem Innenring Wälzkörper, insbesondere Kugeln, angeordnet sind, gelöst. Das Fanglager ist erfindungsgemäß dadurch gekennzeichnet, dass an der dem Außenring abgewandten Seite des Innenrings wenigstens ein Dichtungselement vorgesehen ist. Das Dichtungselement ist als Bürstendichtung oder als Labyrinthdichtung, insbesondere mit einer Ausprägung der Nut tiefer als ein Dichtblech plus Luftspalt zwischen Lagerinnenring und Rotorwelle, ausgebildet.

Ein derartiges Fanglager weist zwei Funktionalitäten auf. Zum einem dient es zum Auffangen einer Rotorwelle einer Dampf- oder Gasturbine, die durch Magnetlager rotierend gehalten ist. Zum anderen weist ein derartiges Fanglager eine Dichtungsfunktion auf, um die Leistung und den Wirkungsgrad der Dampf- oder Gasturbine zu erhöhen. Das wenigstens eine Dichtungselement verhindert eine Umgehung des primären Strömungswegs eines Arbeitsfluides in der Dampf- oder Gasturbine und damit ein Passieren des Arbeitsfluides durch einen zweiten Strömungsweg in Richtung eines Druckgefälles.

Insbesondere ermöglicht ein derartiges Fanglager eine kurze Ausgestaltung der Länge einer Dampf- oder Gasturbine und deren Rotorwelle, da keine zusätzliche Dichtung(en) an der Außenseite der Magnetlagerung erforderlich ist/sind. Der Innendurchmesser des Innenrings des Fanglagers kann geringfügig größer ausgestaltet sein, als ein Fanglager, welches keine Dichtung aufweist. Hierdurch ist der Luftspalt zwischen dem Innenring und der Rotorwelle größer als bei einem bekannten Fanglager ohne Dichtung. Der Luftspalt wird aber durch das Dichtungselement verkleinert, so dass kein beziehungsweise nur ein geringer Druckverlust auftreten kann. Das Dichtungselement ist vorzugsweise derartig an dem Innenring des Fanglagers angeordnet, dass bei einem Ausfall der Funktionalität der Magnetlagerung das Dichtungselement durch die Rotorwelle zerstört werden kann.

Das Dichtungselement des Fanglagers ist vorzugsweise als berührungslose Dichtung beziehungsweise Wellendichtung ausgebildet.

Gemäß einem zweiten Aspekt der Erfindung wird die Aufgabe durch eine Gas- oder Dampfturbine, aufweisend eine Rotorwelle, wenigstens zwei Magnetlager zum rotierbaren Lagern der Rotorwelle, und zumindest zwei Fanglager zum Auffangen der Rotorwelle bei Ausfall der Funktion der Magnetlager, gelöst. Die Gas- oder Dampfturbine ist dadurch gekennzeichnet, dass wenigstens eins der Fanglager, vorzugsweise alle Fanglager, zur Ausbildung einer berührungslosen Abdichtung zwischen dem Fanglager und der Rotorwelle gemäß dem ersten Aspekt der Erfindung, insbesondere nach Anspruch 1, ausgebildet ist.

Eine derartige Gas- oder Dampfturbine ermöglicht eine Abdichtung eines sekundären Strömungsweges des Arbeitsfluides, ohne dass zusätzlich, d.h. räumlich getrennt zu den Fanglagern, Dichtungselemente erforderlich sind. Insbesondere kann durch die Verwendung wenigstens eines derartigen Fanglagers eine Verkürzung der Lagergehäuselänge erzielt werden. Hierdurch ist auch eine Verkürzung der Länge der Rotorwelle und damit der gesamten Gas- oder Dampfturbine möglich. Dies resultiert in Materialeinsparungen und Kosteneinsparungen für die Gas- oder Dampfturbine. Des Weiteren ermöglicht die Verwendung von derartigen Fanglagern bei Dampf- oder Gasturbinen eine Verkürzung des Lagerabstandes, das heißt, des Abstandes der Magnetlager zueinander. Ein Teil der Labyrinthdichtung kann an der Rotorwelle angeordnet sein.

Die vorliegende Erfindung wird anhand der beigefügten Zeichnungen näher erläutert.
- Figur 1: zeigt schematisch eine Gas- oder Dampfturbine mit einer Rotorwelle, einer Magnetlagerung und einer Fanglagerung, die gemäß dem erfindungsgemäßen Konstruktionsprinzip ausgebildet ist,
- Figur 2: zeigt schematisch in einer vergrößerten Darstellung den in Figur 1 mit A dargestellten Ausschnitt der Fanglagerung, und
- Figur 3: zeigt schematisch in einer perspektivischen Ansicht ein Fanglager zum Auffangen einer Rotorwelle einer Gas- oder Dampfturbine, wobei das Fanglager gemäß dem erfindungsgemäßen Konstruktionsprinzip ausgebildet ist.

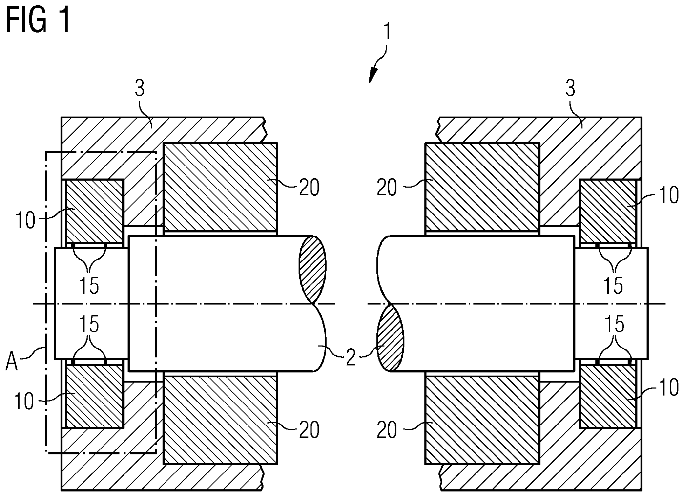

Element mit keiner Funktion und Wirkungsweise sind in den Fig. 1 bis 3 jeweils mit denselben Bezugszeichen versehen.

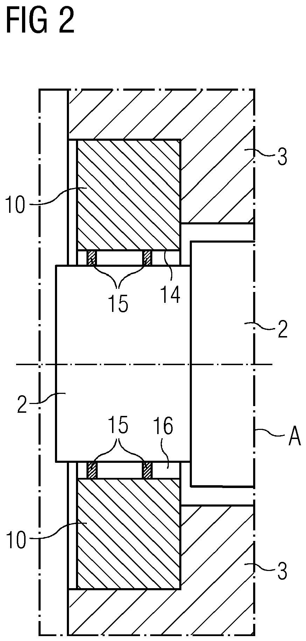

Fig. 1 zeigt schematisch eine Dampf- oder Gasturbine 1, mit einer Rotorwelle 2, einer Magnetlagerung 20 und einer Fanglagerung 10, die gemäß dem erfindungsgemäßen Konstruktionsprinzip ausgebildet ist. An beiden Enden der Rotorwelle 2 der Dampf- oder Gasturbine 1 sind jeweils ein Magnetlager 20 und ein Fanglager 10 angeordnet. Die Magnetlager 20 dienen zur rotierenden Lagerung der Rotorwelle 2. Die Fanglager 10 dienen zum Auffangen der Rotorwelle 2 bei Ausfall der Funktion der Magnetlager 20, das heißt wenn diese beispielsweis nicht mehr bestromt werden. Fig. 2 zeigt eine vergrößerte Darstellung des Ausschnitts A aus Fig. 1.

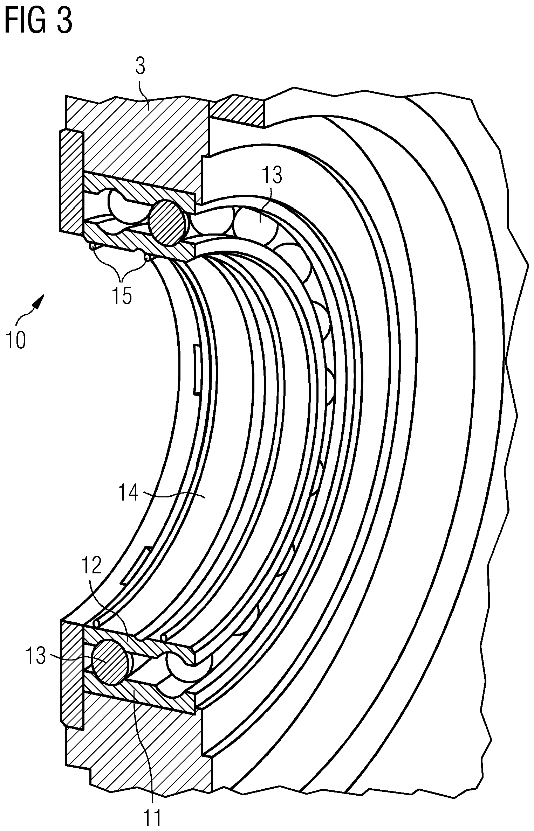

Das Fanglager 10 weist einen Außenring 11 und einen gegenüber dem Außenring 11 rotierbar angeordneten Innenring 12 auf, siehe Fig. 3. Zwischen dem Außenring 11 und dem Innenring 12 eines Fanglagers 10 sind Wälzkörper 13, insbesondere Kugeln, angeordnet. An der dem Außenring 11 abgewandten Seite 14 des Innenrings 12 ist wenigstens ein Dichtungselement 15, vorzugsweise in Form einer Bürstendichtung oder einer Labyrinthdichtung, vorgesehen. Hierdurch weist das Fanglager 10 neben der Auffangfunktionalität eine Abdichtungsfunktionalität auf.

Durch den Einsatz derartiger Fanglager 10 kann die Leistung und der Wirkungsgrad der Dampf- oder Gasturbine erhöht werden. Die Dichtungselemente 15 der Fanglager 10 verhindern eine Umgehung des primären Strömungswegs eines Arbeitsfluides in der Dampf- oder Gasturbine und damit ein Passieren des Arbeitsfluides durch einen zweiten Strömungsweg in Richtung eines Druckgefälles.

Die Fanglager 10 ermöglichen eine kurze Ausgestaltung der Länge der Dampf- oder Gasturbine 1 und deren Rotorwelle 2, da keine zusätzlichen Dichtungen an der Außenseite der Magnetlager 20 erforderlich sind. Der Innendurchmesser des Innenrings 12 eines Fanglagers 10 ist geringfügig größer ausgestaltet, als ein Fanglager, welches keine Dichtung aufweist. Hierdurch ist der Luftspalt 14 zwischen dem Innenring 12 und der Rotorwelle 2 größer als bei einem bekannten Fanglager ohne Dichtung. Der Luftspalt 14 wird aber durch das Dichtungselement 15 verkleinert, so dass kein beziehungsweise nur ein geringer Druckverlust auftreten kann.

Die Magnetlager 20 und die Fanglager 10 sind vorzugsweise in einem Lagergehäuse 3 angeordnet.

## Patentansprüche

1. Fanglager (10) zum Auffangen einer Rotorwelle (2) einer Gasturbine oder Dampfturbine, wobei das Fanglager (10) einen Außenring (11) und einen gegenüber dem Außenring (11) rotierbar angeordneten Innenring (12) aufweist, wobei zwischen dem Außenring (11) und dem Innenring (12) Wälzkörper (13), insbesondere Kugeln, angeordnet sind, **dadurch gekennzeichnet, dass** an der dem Außenring (11) abgewandten Seite (14) des Innenrings (12) wenigstens ein Dichtungselement (15) vorgesehen ist, wobei das Dichtungselement (15) eine Bürstendichtung oder eine Labyrinthdichtung ist.

2. Gasturbine oder Dampfturbine (1), aufweisend eine Rotorwelle (2), wenigstens zwei Magnetlager (20) zum rotierbaren Lagern der Rotorwelle (2), und zumindest zwei Fanglager (10) zum Auffangen der Rotorwelle (2) bei Ausfall der Funktion der Magnetlager (20), **dadurch gekennzeichnet, dass** wenigstens eins der Fanglager (10) zur Ausbildung einer berührungslosen Abdichtung zwischen dem Fanglager (10) und der Rotorwelle (2) nach Anspruch 1 ausgebildet ist.

## Claims

1. Safety bearing (10) for retaining a rotor shaft (2) of a gas turbine or steam turbine, wherein the safety bearing (10) has an outer ring (11) and an inner ring (12) that is arranged so as to be able to rotate with respect to the outer ring (11), wherein rolling elements (13), in particular balls, are arranged between the outer ring (11) and the inner ring (12), **characterized in that** at least one seal element (15) is provided on that side (14) of the inner ring (12) that is oriented away from the outer ring (11), wherein the seal element (15) is a brush seal or a labyrinth seal.

2. Gas turbine or steam turbine (1), having a rotor shaft (2), at least two magnetic bearings (20) for rotatably mounting the rotor shaft (2), and at least two safety bearings (10) for retaining the rotor shaft (2) in the event of failure of the magnetic bearings (20), **characterized in that** at least one of the safety bearings (10) is designed according to Claim 1 to establish a contactless seal between the safety bearing (10) and the rotor shaft (2).

## Revendications

1. Palier de retenue (10) destiné à retenir un arbre de rotor (2) d'une turbine à gaz ou d'une turbine à vapeur, dans lequel le palier de retenue (10) présente une bague externe (11) et une bague interne (12) disposée de manière rotative en face de la bague externe (11), dans lequel entre la bague externe (11) et la bague interne (12) sont disposés des corps de roulement (13), en particulier des billes, **caractérisé en ce qu'**il est prévu au niveau de la face (14) de la bague interne (12) opposée à la bague externe (11) au moins un élément d'étanchéité (15), dans lequel l'élément d'étanchéité (15) est une garniture d'étanchéité en brosses ou une garniture d'étanchéité en labyrinthe.

2. Turbine à gaz ou turbine à vapeur (1), présentant un arbre de rotor (2), au moins deux paliers magnétiques (20) destinés au montage rotatif de l'arbre de rotor (2), et au moins deux paliers de retenue (10) destinés à retenir l'arbre de rotor (2) dans le cas d'une panne du fonctionnement des paliers magnétiques (20), **caractérisée en ce qu'**au moins un des paliers de retenue (10) est réalisé pour la réalisation d'une étanchéité sans contact entre le palier de retenue (10) et l'arbre de rotor (2) selon la revendication 1.
